# EUROPÄISCHE PATENTSCHRIFT

(11) **EP 1 871 644 B1**
(45) Veröffentlichungstag und Bekanntmachung des Hinweises auf die Patenterteilung: **24.02.2010**
(21) Anmeldenummer: 06724507.6
(22) Anmeldetag: 21.04.2006
(51) Int. Cl.: B60Q 1/26

(54) **FAHRZEUGLEUCHTE MIT EINEM IM EINBAUZUSTAND LÖSBAREN BAUTEIL**
MOTOR VEHICLE HEADLAMP PROVIDED WITH A REMOVABLY MOUNTED COMPONENT
PHARE DE VEHICULE COMPRENANT UN COMPOSANT AMOVIBLE UNE FOIS MONTE

(30) Priorität: 21.04.2005 DE 202005006376 U
(43) Veröffentlichungstag der Anmeldung: 02.01.2008
(73) Patentinhaber: Truck-Lite Europe GmbH, 99817 Eisenach (DE)
(72) Erfinder: DEICHMÜLLER, Horst, 99817 Eisenach (DE)
(74) Vertreter: Strasser, Wolfgang
(86) Internationale Anmeldenummer: PCT/EP2006/003712
(87) Internationale Veröffentlichungsnummer: WO 2006/111413

(56) Entgegenhaltungen:
- EP-A- 0 749 871
- EP-A- 1 088 701
- EP-A- 1 518 754
- DE-A1- 10 029 102
- DE-U1- 29 911 621
- FR-A- 2 833 660

## Beschreibung

Die Erfindung betrifft eine Fahrzeugleuchte, insbesondere zum Einbau in eine Karosserieöffnung eines Fahrzeuges, gemäß dem Oberbegriff des Anspruchs 1.

An der Karosserie befestigte Fahrzeugleuchten, wie z.B. Bremsleuchten, werden üblicherweise von außen durch eine Karosserieöffnung in die Karosserie eingesetzt. Solche Fahrzeugleuchten umfassen im Allgemeinen ein Leuchtengehäuse, in dem sich ein Reflektor oder eine Linsenanordnung und ein Leuchtmittel, wie z.B. eine Glühlampe oder LED, befinden. Das Gehäuse hat außerdem eine Lichtaustrittsscheibe, durch die das vom Leuchtmittel ausgestrahlte Licht nach außen strahlt.

Aus der DE 299 11 621 U1 ist eine Befestigungsvorrichtung für ein Leuchtengehäuse bekannt, bei der nach Einschieben des Leuchtengehäuses in eine Einbauöffnung mit Hilfe einer Mutter eine Spannvorrichtung axial so weit verschoben wird, dass sie sich hinter dem Rand der Einbauöffnung verspreizt. Zur Demontage ist es erforderlich, die Mutter in der entgegengesetzten Richtung zu drehen und die Spannvorrichtung so weit zurückzuziehen, dass die Verspreizung aufgehoben wird und die gesamte Anordnung durch die Einbauöffnung hindurch herausgezogen werden kann. Da der Ein- und Ausbau dieser bekannten Anordnung das Verdrehen einer im Allgemeinen nur schwer zugänglichen Mutter erfordert, ist er arbeitszeit- und kostenintensiv.

Es ist daher üblich geworden, Fahrzeugleuchten mit Hilfe einer Rasteinrichtung, die z.B. an einer Rastkante der Karosserie oder einem anderen feststehenden Element angreift, in der Karosserie zu halten. Aus Gründen der besseren Abdichtung übt die Rasteinrichtung in der Regel einen gewissen, von außen nach innen gerichteten Zug aus. Zum Ausbauen der Fahrzeugleuchte ist es daher notwendig, die Schneide eines Schraubendrehers oder eines ähnlichen Gegenstandes in den Spalt zwischen Karosserie und Leuchtengehäuse einzuführen und die Fahrzeugleuchte dadurch herauszuhebeln. Der Nachteil dieser Methode besteht darin, dass dadurch sowohl die Lackoberfläche der Karosserie als auch die Fahrzeugleuchte selbst erheblich beschädigt werden können. Die Demontage ist darüber hinaus zeitaufwändig.

Es ist daher die Aufgabe der vorliegenden Erfindung, eine Fahrzeugleuchte zu schaffen, die ohne Beschädigung des Karosserielackes oder der Leuchte selbst in einfacher Weise wieder ausgebaut werden kann.

Gelöst wird diese Aufgabe gemäß der Erfindung durch die im Patentanspruch 1 angegebenen Merkmale. Weitere Ausgestaltungen der Erfindung sind Gegenstand von Unteransprüchen.
Ein wesentlicher Gedanke der Erfindung besteht darin, die Fahrzeugleuchte einerseits mit einer Gehäuse-Rasteinrichtung zu realisieren, die von einem Bauteil, wenn sich dieses in einer ersten Stellung befindet, blockiert, und wenn sich dieses in einer zweiten Stellung befindet, freigegeben wird. Dies hat den wesentlichen Vorteil, dass sich die Gehäuse-Rasteinrichtung durch Bewegen des Bauteils lösen lässt und das Gehäuse mit vergleichsweise geringer Kraft aus der Karosserieöffnung herausgedrückt werden kann.

Weiterhin ist das Bauteil im Leuchtengehäuse angeordnet und mittels einer weiteren, als Bauteil-Rasteinrichtung ausgebildeten Rasteinrichtung im Gehäuse fixierbar.

Überdies umfasst die erfindungsgemäße Leuchte wenigstens ein Federelement, das gleichzeitig sowohl einen Teil der Gehäuse-Rasteinrichtung als auch einen Teil der Bauteil-Rasteinrichtung bildet

Gemäß einer bevorzugten Ausführungsform der Erfindung ist das Bauteil ein Reflektor bzw. Leuchtmittelträger oder eine Linsenanordnung. Im Falle eines einrastbaren Bauteils wird die Gehäuse-Rasteinrichtung vorzugsweise blockiert, wenn sich das Bauteil in der eingerasteten Stellung befindet, und freigegeben, wenn es sich in einer ausgerasteten Stellung befindet.

Das Bauteil ist vorzugsweise mit einer von außen zugänglichen Struktur, wie z.B. einer Ausnehmung, versehen, an der ein Werkzeug ansetzbar ist. Das Bauteil kann somit über eine andere Karosserieöffnung mit Hilfe des Werkzeugs (oder von Hand) bewegt bzw. aus der Raststellung ausgerastet werden.

Das Leuchtengehäuse hat vorzugsweise an der Stelle der Struktur eine Ausnehmung, die mit der Struktur des Bauteils im eingerasteten Zustand fluchtet und es ermöglicht, durch die zweite Karosserieöffnung von außen an die Struktur zu gelangen.

Vorzugsweise bildet das Federelement an einem ersten Abschnitt einen Teil der Gehäuse-Rasteinrichtung und an einem anderen Abschnitt einen Teil der Bauteil-Rasteinrichtung, der mit einem korrespondierenden Rastelement des Bauteils zusammenwirkt.

Gemäß einer bevorzugten Ausführungsform der Erfindung ist die Feder am Leuchtengehäuse befestigt und um den Befestigungspunkt, vorzugsweise in Richtung einer Gehäuse-Mittelachse, schwenkbar gelagert. Wenn das Bauteil aus der ersten Stellung heraus bewegt wird, kann die Feder somit nach innen schwenken und das Leuchtengehäuse freigeben.

Die Feder verläuft vorzugsweise wenigstens abschnittsweise entlang einer Gehäusewand im Inneren des Leuchtengehäuses, bildet dort die Bauteil-Rasteinrichtung, und ragt im Bereich der Gehäuse-Rasteinrichtung aus einem im Leuchtengehäuse gebildeten Fenster nach außen.

Das Leuchtengehäuse ist vorzugsweise einstückig gebildet. Dadurch ist es einfach und kostengünstig herstellbar.

Im Falle eines Reflektors bzw. Leuchtmittelträgers als Bauteil hat dieser vorzugsweise einen Anschlag, der eine Bewegung des Reflektors in Richtung der Lichtaustrittsscheibe (vorne) begrenzt. Dadurch wird verhindert, dass die Lichtquelle zu nahe an die Lichtaustrittsscheibe rücken kann und diese möglicherweise zu stark erhitzt.

Der Reflektor hat vorzugsweise auch ein Rastelement einer zweiten Rasteinrichtung, das mit einem korrespondierenden Rastelement des Leuchtengehäuses zusammenwirkt. Diese zweite Rasteinrichtung ist vorzugsweise derart realisiert, dass der Reflektor zwar im Gehäuse gehalten, aber in begrenztem Ausmaß darin bewegbar ist. In einer vorderen Position (Arbeitsposition) rastet der Reflektor vorzugsweise in der ersten Rasteinrichtung ein. In einer hinteren Position wird dagegen die Gehäuse-Rasteinrichtung freigegeben.

Das Gehäuse ist vorzugsweise aus einem Kunststoffmaterial hergestellt und hat flexible Seitenwände. Nach dem Ausbau der Leuchte kann das Bauteil einfach durch Verformen der Gehäusewände aus dem Gehäuse herausgenommen und das Leuchtmittel gewechselt werden.

Das Leuchtengehäuse ist vorzugsweise an der Seite, die parallel zur Lichtaustrittsscheibe im Karosserieraum liegt, offen. Das Bauteil wird vorzugsweise von dieser Seite her in das Gehäuse eingesetzt und im Gehäuse eingerastet.

Die Fahrzeugleuchte bzw. die Gehäuse-Rasteinrichtung ist vorzugsweise derart gestaltet, dass der Einbau der Leuchte mit einem in Arbeitsposition eingerasteten Bauteil erfolgen kann.

Die Erfindung wird nachstehend anhand der beigefügten Zeichnungen beispielhaft näher erläutert. Es zeigen:
- Figur 1: eine seitliche Schnittansicht einer Fahrzeugleuchte in einer ersten Schnittansicht; und
- Figur 2: eine seitliche Schnittansicht derselben Fahrzeugleuchte in einer parallelen Schnittebene.

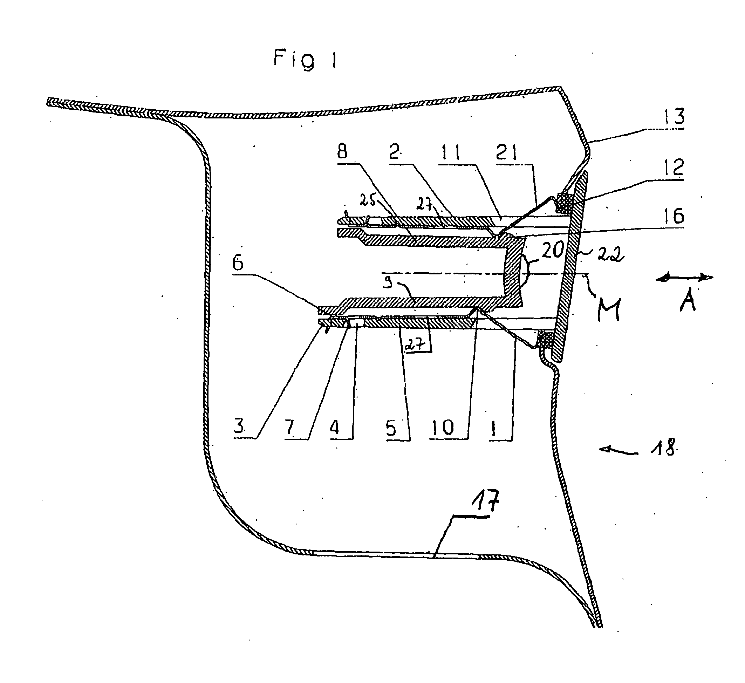

Figur 1 zeigt eine Schnittansicht einer Heckklappe 18 eines Fahrzeuges mit einer darin eingebauten hoch gesetzten Bremsleuchte. Die Fahrzeugleuchte umfasst ein einstückig gebildetes Leuchtengehäuse 5 mit seitlichen Wänden 2 und einer Lichtaustrittsscheibe 22, durch die das von einer Lichtquelle 20 ausgestrahlte Licht nach außen strahlt. Im Inneren des Gehäuses 5 befindet sich ein Reflektor 9, der im Gehäuse 5 eingerastet ist (Rastelemente 10,16).

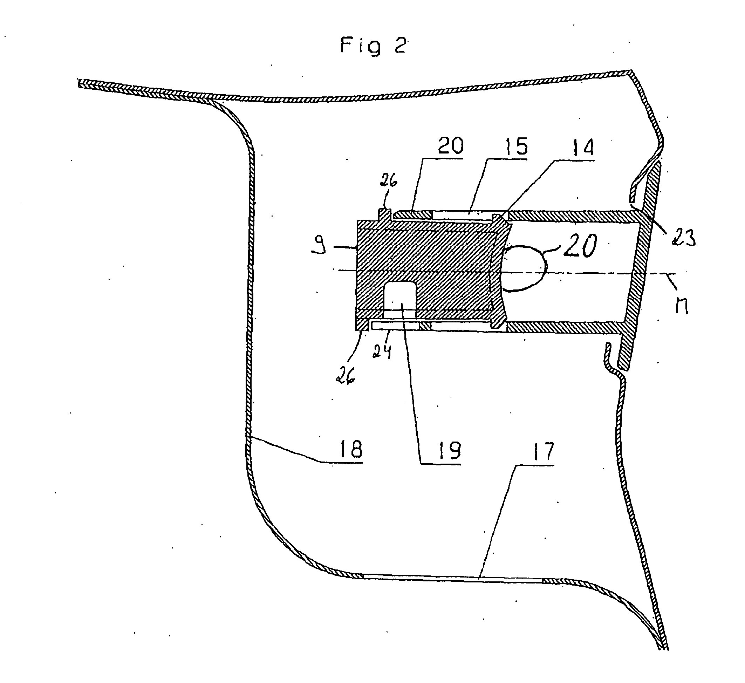

Die Fahrzeugleuchte wird im dargestellten vormontierten Zustand durch die Karosserieöffnung 23 (siehe Fig. 2) in die Karosserie 13 hinein geschoben, bis sie in der Einbauposition einrastet. Die Einbau- bzw. Ausbaurichtung ist hier durch einen Pfeil A gekennzeichnet. Zur Befestigung des Gehäuses 5 an der Karosserie 13 ist eine Gehäuse-Rasteinrichtung 12,21 vorgesehen, die jeweils aus einem Feder-Abschnitt 21 einer Feder 1 und einer Rastkante 12 der Karosserie 13 gebildet wird. Der Feder-Abschnitt 21 ist derart gebogen, dass die Leuchte mit relativ geringem Kraftaufwand in die Karosserieöffnung 23 hineingedrückt, aber nicht oder nur mit hohem Kraftaufwand wieder heraus gezogen werden kann.

Die Leuchte umfasst zwei gegenüberliegende Federn 1, die in einem tiefer eingetauchten Abschnitt des Gehäuses 5 im Gehäuseinneren entlang einer Innenwand 2 verlaufen und im Bereich der Karosserie 13 durch ein Fenster 11 aus dem Gehäuse 5 heraus ragen. Die Federn 1 bilden dabei gleichzeitig einen Teil der Gehäuse-Rasteinrichtung 12,21 als auch einen Teil der Reflektor-Rasteinrichtung 10,16.

Die Federn 1 sind an ihren der Lichtaustrittsscheibe gegenüberliegenden Enden am Gehäuse 5 befestigt und um diesen Befestigungspunkt 6 schwenkbar gelagert. Im dargestellten Ausführungsbeispiel ist das Ende der Federn 1 umgebogen und mit einer Öffnung versehen, durch die das Gehäuseende 3 hindurch gesteckt ist. Eine Lasche 7, die in geringem Abstand zum Federende vorgesehen ist, fixiert dann die Federn 1 am Leuchtengehäuse 5.

Wenn der Reflektor 9 aus seiner Raststellung heraus bewegt wird (in der Figur nach links), kommen die Vorsprünge 16 jeweils gegenüber einer in den Federn 1 vorgesehenen Öffnung 27 zu liegen, wodurch die Federn 1 um den Befestigungspunkt 6 in Richtung einer Mittelachse M der Leuchte schwenken können. Diese Schwenkbewegung wird durch Sicken 25 unterstützt, die in der Wand der Federn 1 vorgesehen sind und den Federn 1 eine geringe Vorspannung nach innen verleihen. Nach dem Lösen des Reflektors 9 fallen die Federn 1 somit automatisch nach innen und geben das Leuchtengehäuse zum Ausbau frei. Nach dem Ausbau der Leuchte kann der Reflektor 9 einfach durch Verformen der Gehäusewände 2 aus dem Gehäuse 5 herausgenommen und die Glühlampe 20 gewechselt werden.

Figur 2 zeigt eine andere Schnittansicht der hoch gesetzten Fahrzeug-Bremsleuchte in einer zu Figur 1 parallelen Schnittebene, die jedoch in einem tieferen Bereich des Reflektors 9 liegt. In dieser Ansicht ist eine zweite Reflektor-Rasteinrichtung 14,15 zu erkennen, die eine am Reflektor 9 vorgesehene Rastnase 14 und einen im Gehäuse 5 vorgesehenen korrespondierenden Schlitz 15 umfasst. Der Reflektor 9 wird dadurch in einem geringen Ausmaß beweglich im Leuchtengehäuse 5 gelagert. Wenn sich der Reflektor in der vorderen, hier dargestellten Position, befindet, stehen zwei am Reflektor 9 vorgesehene Anschläge 26 am Leuchtengehäuse 5 an und verhindern ein weiteres Bewegen des Reflektors 9 in Richtung der Lichtaustrittsscheibe 22. In dieser Stellung ist der Reflektor 9 mittels der ersten Rasteinrichtung 10, 16 eingerastet. In der hinteren Stellung ist der Reflektor 9 aus der ersten Reflektor-Rasteinrichtung 10, 16 ausgerastet und die Rastvorsprünge 16 (Fig. 1) befinden sich gegenüber den Ausnehmungen 27 der Federn 1, wodurch die Federn nach innen schwenken können.

Der Reflektor 9 umfasst außerdem eine von außen zugängliche Ausnehmung 19, an der ein Werkzeug (gegebenenfalls auch eine Hand) durch eine Öffnung 17 an der Unterseite des Kofferraumdeckels 18 angesetzt werden kann. Das Leuchtengehäuse 5 hat an dieser Stelle eine korrespondierende Ausnehmung. Der Reflektor 9 kann somit aus der ersten Reflektor-Rasteinrichtung 10,16 ausgerastet und nach hinten gedrückt werden, bis die an den Rastnasen 14 vorgesehenen Anschläge an der Rückseite der Schlitze 15 anstehen. Durch das Zurückziehen des Reflektors 9 schwenken die Federn 1, wie vorstehend beschrieben, nach innen, wodurch das Leuchtengehäuse 5 freigegeben wird. Die Fahrzeugleuchte kann somit einfach aus der Karosserieöffnung 23 herausgezogen werden.

### Bezugszeichenliste

- 1: Federn
- 2: Gehäusewände
- 3: Vorderes Gehäuseende
- 4: Öffnung
- 5: Leuchtengehäuse
- 6: Befestigungspunkt
- 7: Lasche
- 8: Reflektorwand
- 9: Reflektor
- 10: Federvorsprung
- 11: Fenster
- 12: Rastkante
- 13: Karosserie
- 14: Rastnase
- 15: Schlitz
- 16: Vorsprung
- 17: Zweite Karosserieöffnung
- 18: Kofferraumdeckel
- 19: Reflektorausnehmung
- 20: Glühlampe
- 21: Federabschnitt
- 22: Lichtaustrittsscheibe
- 23: Karosserieöffnung
- 24: Gehäuseöffnung
- 25: Sicke
- 26: Anschlag
- 27: Federöffnung

## Patentansprüche

1. Fahrzeugleuchte zum Einbau in eine Karosserieöffnung (23) eines Fahrzeuges, mit
- einem Leuchtengehäuse (5) und
- einer Gehäuse-Rasteinrichtung (12,21), die das Leuchtengehäuse (5) in der Karosserieöffnung (23) hält,
**dadurch gekennzeichnet,**
**dass** die Gehäuse-Rasteinrichtung (12, 21) durch ein Bauteil (9), wenn sich dieses in einer ersten Stellung befindet, blockiert, und wenn sich dieses in einer zweiten Stellung befindet, freigegeben wird, so dass das Leuchtengehäuse (5) mit geringer Kraft aus der Karosserieöffnung (23) heraus genommen werden kann,
**dass** das Bauteil (9) mittels einer Bauteil-Rasteinrichtung (10, 16) im Leuchtengehäuse (5) befestigbar ist und
**dass** die Leuchte ein Federelement (1) umfasst, das gleichzeitig sowohl einen Teil der Gehäuse-Rasteinrichtung (12,21) als auch einen Teil der Bauteil-Rasteinrichtung (10, 16) bildet.

2. Fahrzeugleuchte nach Anspruch 1, **dadurch gekennzeichnet, dass** das Bauteil (9) eine von außen zugängliche Struktur (19) aufweist, an der ein Werkzeug ansetzbar ist, um es zu bewegen.

3. Fahrzeugleuchte nach Anspruch 2, **dadurch gekennzeichnet, dass** die Struktur eine Ausnehmung (19) ist.

4. Fahrzeugleuchte nach einem der Ansprüche 1 oder 2, **dadurch gekennzeichnet, dass** das Leuchtengehäuse (5) eine Öffnung (24) aufweist, die mit der Struktur (19) im eingebauten Zustand des Bauteils (9) fluchtet.

5. Fahrzeugleuchte nach einem der vorhergehenden Ansprüche, **dadurch gekennzeichnet, dass** das Federelement (1) an einer Rastkante (12) der Einbauöffnung (23) angreift.

6. Fahrzeugleuchte nach Anspruch 1, **dadurch gekennzeichnet, dass** das Federelement (1) am Leuchtengehäuse (5) befestigt ist, wobei es um den Befestigungspunkt (6) in Richtung einer Gehäuse-Mittelachse (M) schwenkbar ist.

7. Fahrzeugleuchte nach Anspruch 1, **dadurch gekennzeichnet, dass** das Federelement (1) abschnittsweise im Inneren des Leuchtengehäuses (5) verläuft und im Bereich der Gehäuse-Rasteinrichtung (12,21) aus einem Fenster (11) des Leuchtengehäuses (5) nach außen herausragt.

8. Fahrzeugleuchte nach Anspruch 7, **dadurch gekennzeichnet, dass** das Federelement (1) einen Vorsprung (25) aufweist, der das Federelement (1) von der Gehäusewand (2) wegdrückt.

9. Fahrzeugleuchte nach einem der vorhergehenden Ansprüche, **dadurch gekennzeichnet, dass** das Bauteil ein Reflektor (9) oder eine Linsenanordnung ist.

10. Fahrzeugleuchte nach Anspruch 9, **dadurch gekennzeichnet, dass** der Reflektor (9) einen Anschlag (26, 27) aufweist, der eine Bewegung des Reflektors (9) in Richtung einer Lichtaustrittsscheibe (22) begrenzt.

11. Fahrzeugleuchte nach Anspruch 9, **dadurch gekennzeichnet, dass** der Reflektor (9) eine zweite Rasteinrichtung (14) aufweist, die mit einem korrespondierenden Rastelement (15) des Leuchtengehäuses (5) zusammenwirkt, so dass der Reflektor (9) in begrenztem Ausmaß im Gehäuse (5) hin und her bewegbar ist.

## Claims

1. A vehicle light for installation in an opening (23) in the bodywork of a vehicle, comprising
- a light housing (5) and
- a housing latching device (12, 21) which holds the light housing (5) in the opening (23) in the bodywork,
**characterised in that**
the housing latching device (5) is blocked by a component (9) when the component is in a first position and is released when the component is in a second position so that the light housing (5) can be removed from the opening (23) in the bodywork with a low force,
the component (9) can be fixed in the light housing (5) by means of a component latching device (10, 16), and
the light includes a spring element (1) which at the same time forms both a part of the housing latching device (12, 21) and also a part of the component latching device (10, 16).

2. A vehicle light according to claim 1 **characterised in that** the component (9) has a structure (19) which is accessible from the exterior and to which a tool can be fitted in order to move it.

3. A vehicle light according to claim 2 **characterised in that** the structure is an aperture (19).

4. A vehicle light according to one of claims 1 and 2 **characterised in that** the light housing (5) has an opening (24) which aligns with the structure (19) in the installed condition of the component (9).

5. A vehicle light according to one of the preceding claims **characterised in that** the spring element (1) engages a latching edge (12) of the installation opening (23).

6. A vehicle light according to claim 1 **characterised in that** the spring element (1) is fixed to the light housing (5), in which case it is pivotable about the fixing point (6) in the direction of a central axis (M) of the housing.

7. A vehicle light according to claim 1 **characterised in that** the spring element (1) extends in portion-wise manner in the interior of the light housing (5) and in the region of the housing latching device (12, 21) projects outwardly out of a window (11) of the light housing (5).

8. A vehicle light according to claim 7 **characterised in that** the spring element (1) has a projection (25) which presses the spring element (1) away from the housing wall (2).

9. A vehicle light according to one of the preceding claims **characterised in that** the component is a reflector (9) or a lens arrangement.

10. A vehicle light according to claim 9 **characterised in that** the reflector (9) has an abutment (26, 27) which limits a movement of the reflector (9) in the direction of a light exit cover (22).

11. A vehicle light according to claim 9 **characterised in that** the reflector (9) has a second latching device (14) which co-operates with a corresponding latching element (15) of the light housing (5) so that the reflector (9) is reciprocatable in the housing (5) to a limited extent.

## Revendications

1. Phare de véhicule destiné à être monté dans une ouverture (23) de la carrosserie d'un véhicule automobile, comportant :
- un boîtier (5) et
- un dispositif de blocage du boîtier (12, 21), qui maintient le boîtier (5) du phare dans l'ouverture (23) de la carrosserie,
**caractérisé**
**en ce que** le dispositif de blocage (12, 21) du boîtier est bloqué par un élément (9) lorsque celui est dans une première position et est débloqué par cet élément lorsque celui-ci est dans une deuxième position, de telle sorte que le boîtier (5) du phare peut être retiré avec une faible force hors de l'ouverture (23) de la carrosserie,
**en ce que** l'élément (9) peut être fixé dans le boîtier (5) du phare au moyen d'un dispositif de blocage (10, 16) de l'élément, et
**en ce que** le phare comporte un élément de ressort (1), qui forme en même temps une pièce du dispositif de blocage (12, 21) du boîtier et une pièce du dispositif de blocage (10, 16) de l'élément.

2. Phare de véhicule selon la revendication 1, **caractérisé en ce que** l'élément (9) comporte une structure (19) accessible de l'extérieur, sur laquelle peut être posé un outil pour déplacer ledit élément.

3. Phare de véhicule selon la revendication 2, **caractérisé en ce que** la structure est un évidement (19).

4. Phare de véhicule selon la revendication 1 ou 2, **caractérisé en ce que** le boîtier (5) du phare comporte une ouverture (24) qui, dans la position montée de l'élément (9), est alignée avec la structure (19).

5. Phare de véhicule selon l'une quelconque des revendications précédentes, **caractérisé en ce que** l'élément de ressort (1) entre en contact avec un bord d'arrêt (12) de l'ouverture de montage (23).

6. Phare de véhicule selon la revendication 1,
**caractérisé en ce que** l'élément de ressort (1) est fixé contre le boîtier (5) du phare, en étant apte à pivoter autour du point de fixation (6) dans la direction d'un axe médian (M) du boîtier.

7. Phare de véhicule selon la revendication 1, **caractérisé en ce que** l'élément de ressort (1) s'étend, par zones, à l'intérieur du boîtier (5) du phare et, dans la zone du dispositif de blocage (12, 21) du boîtier, s'engage vers l'extérieur hors d'une fenêtre (11) du boîtier (5) du phare.

8. Phare de véhicule selon la revendication 7, **caractérisé en ce que** l'élément de ressort (1) comporte une saillie (25) qui pousse l'élément de ressort (1) pour l'écarter de la paroi (2) du boîtier.

9. Phare de véhicule selon l'une quelconque des revendications précédentes, **caractérisé en ce que** l'élément est un réflecteur (9) ou un système de lentilles.

10. Phare de véhicule selon la revendication 9, **caractérisé en ce que** le réflecteur (9) comporte une butée (26, 27), qui limite un mouvement du réflecteur (9) vers une vitre de sortie de lumière (22).

11. Phare de véhicule selon la revendication 9, **caractérisé en ce que** le réflecteur (9) comporte un deuxième dispositif d'arrêt (14), qui coopère avec un élément d'arrêt (15) correspondant du boîtier (5) du phare, de telle sorte que le réflecteur (9) peut être déplacé en va-et-vient sur un trajet limité dans le boîtier (5).
